# FASCICULE DE BREVET EUROPEEN

(11) **EP 3 328 737 B1**
(45) Date de publication et mention de la délivrance du brevet: **01.01.2020**
(21) Numéro de dépôt: 16750942.1
(22) Date de dépôt: 11.07.2016
(51) Int. Cl.: B64G 1/24, B64G 1/62, B64C 3/46, B64C 9/32, B64G 1/10, F17C 7/04

(54) **DISPOSITIF ET PROCÉDÉ D'AÉROFREINAGE ET DE PASSIVATION DE SATELLITE**
SATELLITEN-ATMOSPHÄRENBREMSUNGS- UND PASSIVIERUNGSVORRICHTUNG UND -VERFAHREN
SATELLITE AEROBRAKING AND PASSIVATION DEVICE AND METHOD

(30) Priorité: 30.07.2015 FR 1557332
(43) Date de publication de la demande: 06.06.2018
(73) Titulaire: ArianeGroup SAS, 75015 Paris (FR); Centre National d'Etudes Spatiales (CNES), 75001 Paris (FR)
(72) Inventeur: DUPUY, Christian, 31140 Saint-Loup-Cammas (FR); RASSE, Benjamin, 33000 Bordeaux (FR)
(74) Mandataire: Delorme, Nicolas
(86) Numéro de dépôt international: PCT/FR2016/051776
(87) Numéro de publication internationale: WO 2017/017333

(56) Documents cités:
- EP-A2- 2 813 433
- WO-A2-2005/000671
- FR-A1- 2 871 441
- FR-A1- 2 896 773
- FR-A1- 2 897 843
- US-A- 4 518 137

## Description

L'invention concerne un dispositif et un procédé d'aérofreinage et de passivation d'un satellite artificiel.

L'Espace proche de la Terre est encombré par des satellites artificiels en fin de vie pouvant rester en orbite durant de longues années. En effet, la pression d'air étant très diminuée en haute altitude, les forces de frottements aérodynamiques ne sont pas suffisantes pour entraîner un ralentissement suffisamment rapide des satellites. L'encombrement résultant augmente ainsi que les risques de collision et de destruction des satellites.

Afin de ne pas saturer l'Espace proche, les agences spatiales imposent de limiter à 25 ans le temps de présence d'un satellite en orbite basse après sa fin de mission. Un tel satellite doit être désorbité afin qu'il se détruise naturellement dans l'atmosphère. Or, à titre d'exemple, un satellite d'un rapport surface projetée sur masse de l'ordre de 5 à 6.10⁻³ m²/kg en orbite à une altitude de 700 kilomètres met environ 45 ans pour descendre à une altitude à laquelle il est détruit. C'est pourquoi il est essentiel de concevoir des dispositifs et des procédés permettant une désorbitation plus rapide.

En outre, le Comité inter-agences de coordination des débris spatiaux (IADC) impose également une "passivation" qui consiste, avant désorbitation, à vidanger les ergols, les gaz de pressurisation et à décharger les batteries afin de rendre les composants inertes et de réduire les risques de collision ultérieure et les conséquences que pourrait avoir une éventuelle explosion accidentelle. En effet, une telle explosion pourrait générer une multitude de nouveaux débris. De plus, la passivation permet également de s'assurer qu'un réservoir ne retombe pas sur Terre alors qu'il contient encore de l'ergol. EP2813433 décrit un procédé et un dispositif de vidange pour la passivation d'un réservoir d'ergol.

Une désorbitation peut être accomplie grâce à des dispositifs de propulsion d'un satellite orientés dans le sens contraire du sens de déplacement du satellite. Cependant, une telle méthode consomme une grande quantité d'ergol. Une autre méthode connue de désorbitation moins coûteuse est l'aérofreinage. Cette méthode consiste à utiliser et augmenter les forces de frottements aérodynamiques s'exerçant sur le satellite par la haute atmosphère d'une planète afin de ralentir le satellite plus rapidement.

Dans tout le texte, le terme « aérofreinage » désigne l'effet de freinage résultant des forces de frottement intervenant entre un satellite et une quelconque composition gazeuse atmosphérique d'une planète, que cette composition gazeuse soit de l'air ou non. En effet, si le problème de la désorbitation et de la passivation de satellite artificiel se pose actuellement avec acuité en ce qui concerne les satellites artificiels de la Terre, il se pose également au moins potentiellement pour tout autre objet céleste à atmosphère tel que Saturne, Mars...

Il est à noter que l'invention ne concerne pas l'aérocapture (procédé de mise en orbite) de satellites, technique dans laquelle aucune passivation n'est effectuée.

On connaît plusieurs procédés d'aérofreinage de satellite artificiel. L'objectif de l'aérofreinage étant d'augmenter la traînée du satellite, un procédé connu consiste à utiliser les panneaux photovoltaïques des satellites comme surface de freinage. Un autre procédé connu consiste à déployer une voilure spécifique augmentant les dimensions de la surface apparente de freinage du satellite.

Ainsi, US 4518137 A, qui est considéré comme l'art antérieur le plus proche, décrit un dispositif d'aérofreinage pour véhicules spatiaux permettant de les placer en orbite basse en vue de leur récupération par une navette, comprenant une voilure pouvant être déployée en lui insufflant un ergol de propulsion tel que de l'hydrogène gazeux. Cependant, un tel dispositif présente plusieurs inconvénients. En effet, l'hydrogène est un gaz inflammable et présente donc un risque pour la voilure. De plus, le fait de l'emmagasiner dans une voilure ne satisfait pas les critères de passivation car l'hydrogène passe du réservoir du satellite à la voilure qui devient alors un réservoir d'hydrogène. Un risque d'explosion persiste donc. En outre, l'hydrogène servant d'ergol pour la propulsion du véhicule devrait pouvoir être utilisé en totalité pour la mission, et il est souhaitable, pour des raisons de coût notamment, de ne pas être contraint de prévoir une quantité d'ergol uniquement pour permettre le déploiement de la voilure et la phase de désorbitation. FR2897842 décrit une voilure déployable d'aérofreinage de satellites permettant une désorbitation et une rentrée forcée dans l'atmosphère en fin de vie. Ce document n'indique pas comment la structure est déployée, et ne vise pas le problème de la passivation.

L'invention vise donc à pallier ces inconvénients en proposant un dispositif et un procédé d'aérofreinage d'un satellite artificiel permettant aussi d'en réaliser la passivation, c'est à dire de respecter les normes applicables en matière de passivation et de désorbitation et de mettre à profit la phase de désorbitation par aérofreinage pour passiver le satellite.

L'invention vise également à proposer un dispositif et un procédé d'aérofreinage et de passivation exploitant uniquement les ressources imposées par la mission du satellite et restant disponibles en fin de la mission du satellite, sans nécessiter d'autres ressources additionnelles spécifiques dédiées pour la désorbitation ou pour cette passivation. L'invention vise donc en particulier à proposer un dispositif et un procédé d'aérofreinage et de passivation de moindre coût de fabrication et d'utilisation.

L'invention vise également, pour une même quantité de ressources -notamment d'ergol- embarquées dédiée à la mission d'un satellite artificiel, à augmenter la durée de vie du satellite ; et/ou à réduire la quantité de ressources -notamment d'ergol- embarquées dédiée à la mission d'un satellite artificiel pour une même durée de vie du satellite.

L'invention vise également à proposer un dispositif et un procédé d'aérofreinage et de passivation simplifiant et minimisant les étapes (télécommandes, commandes, manœuvres...) nécessaires à la désorbitation et à la passivation.

Pour ce faire, l'invention concerne un dispositif d'aérofreinage d'un satellite artificiel d'une planète à atmosphère, comprenant au moins une voilure d'aérofreinage reliée à au moins un réservoir d'ergol du satellite de façon à pouvoir être déployée par gonflage par un gaz, dit gaz de gonflage, issu d'un tel réservoir, caractérisé en ce qu'il comprend au moins un dispositif de contrôle de fuite adapté pour libérer un débit de fuite de gaz de gonflage dans l'Espace lors du déploiement de chaque voilure d'aérofreinage, ce débit de fuite étant adapté pour :
- permettre l'introduction dans la voilure d'aérofreinage d'un débit, dit débit de gonflage, de gaz de gonflage issu dudit réservoir d'ergol adapté pour entraîner un déploiement de la voilure d'aérofreinage par gonflage,
- assurer une purge totale dudit réservoir d'ergol et de la voilure d'aérofreinage après le déploiement de la voilure d'aérofreinage,
   de sorte qu'il constitue un dispositif d'aérofreinage et de passivation du satellite.

Les inventeurs ont en effet constaté qu'il existe un débit de fuite du gaz de gonflage qui est compatible à la fois avec un débit de gonflage suffisant, en présence de ce débit de fuite, pour entraîner un déploiement de la voilure d'aérofreinage, et avec une purge totale du réservoir d'ergol et de la voilure d'aérofreinage après le déploiement de cette dernière, tout en permettant le freinage du satellite et sa désorbitation. Ainsi, avantageusement et selon l'invention, le dispositif de contrôle de fuite est adapté pour maintenir ledit débit de fuite après le déploiement de la voilure d'aérofreinage, au moins pendant une durée adaptée pour permettre d'une part la désorbitation du satellite par aérofreinage et d'autre part sa passivation avant destruction dans l'atmosphère.

Une voilure d'aérofreinage d'un dispositif selon l'invention est apte à être déployée par gonflage. Dans certains modes de réalisation, une voilure d'aérofreinage est maintenue à l'état déployé principalement sous l'effet de la pression du gaz de gonflage. Dans ces modes de réalisation, avantageusement et selon l'invention, le dispositif de contrôle de fuite est adapté pour maintenir ledit débit de fuite au moins pendant une durée adaptée pour maintenir la voilure d'aérofreinage à l'état déployé en présence du débit de fuite après son déploiement pour permettre la désorbitation du satellite par aérofreinage jusqu'à une orbite de destruction.

Dans certains modes de réalisation, avantageusement et selon l'invention, au moins une -notamment chaque- voilure d'aérofreinage est dotée d'une structure rigide assurant son maintien en forme après déploiement en l'absence de gaz dans la voilure d'aérofreinage. Dans ces modes de réalisation, le débit de fuite permet de purger et de passiver entièrement la voilure d'aérofreinage immédiatement après son déploiement, la présence d'une pression de gaz de gonflage n'étant plus nécessaire au maintien de la voilure d'aérofreinage à l'état déployé. Un mât déployable tel que décrit par WO 2010/004168 peut faire office de structure rigide.

Dans un dispositif selon l'invention, un dispositif de contrôle de fuite peut être disposé en plusieurs endroits différents, notamment au niveau d'un réservoir d'ergol, au niveau de la voilure d'aérofreinage elle-même, ou dans un circuit reliant chaque réservoir d'ergol à une voilure d'aérofreinage. Avantageusement et selon l'invention, au moins un dispositif de contrôle de fuite est interposé entre chaque voilure d'aérofreinage et chaque réservoir d'ergol auquel cette voilure d'aérofreinage est reliée.

Par ailleurs, plus particulièrement, dans certains modes de réalisation avantageux un dispositif selon l'invention est caractérisé en ce que chaque voilure d'aérofreinage est reliée à au moins un réservoir d'ergol par au moins une conduite comprenant une vanne de déploiement à ouverture commandée, et en ce qu'au moins un dispositif de contrôle de fuite est interposé entre chaque vanne de déploiement et la voilure d'aérofreinage. Dans ces modes de réalisation, le dispositif de contrôle de fuite prélève un débit de fuite libéré dans l'Espace en parallèle au débit de gaz circulant entre la vanne de déploiement et la voilure d'aérofreinage, en préservant un débit de gonflage de la voilure d'aérofreinage avec une pression de gonflage suffisante pour assurer le déploiement de la voilure d'aérofreinage.

Par ailleurs, avantageusement et selon l'invention, chaque voilure d'aérofreinage est reliée à au moins un réservoir d'ergol du satellite comprenant un gaz de pressurisation distinct d'un ergol de façon à pouvoir recevoir et être gonflée par ce gaz de pressurisation distinct d'un ergol. L'utilisation du gaz de pressurisation d'un réservoir d'ergol qui n'est pas lui-même un ergol pour gonfler une voilure d'aérofreinage permet, pour un même volume d'ergol embarqué, d'augmenter la durée de vie du satellite jusqu'à 30%. En effet, l'ergol n'est pas utilisé pour la phase de désorbitation pour propulser le satellite vers une orbite basse. L'intégralité du volume d'ergol peut ainsi être mise à profit au cours de la mission du satellite, avec les coefficients de sécurité habituels, et le volume résiduel d'ergol en fin de mission peut être intégralement éjecté dans l'Espace pour la passivation du satellite avant même le déploiement de chaque voilure d'aérofreinage. En outre, un tel gaz de pressurisation est un gaz inerte, non corrosif, non explosif, permettant un déploiement de chaque voilure d'aérofreinage, puis une passivation totale sans risque d'explosion. Une telle désorbitation est en outre réalisée de façon simplifiée et à moindre coût. Avantageusement et selon l'invention, le gaz de pressurisation est choisi dans le groupe formé de l'hélium He et du diazote N₂. Le réservoir d'ergol est par exemple un réservoir d'hydrazine.

Tout dispositif de contrôle de fuite peut être utilisé dans un dispositif d'aérofreinage selon l'invention.

Dans certains modes de réalisation préférentiels, avantageusement et selon l'invention, au moins un -notamment chaque- dispositif de contrôle de fuite est adapté pour pouvoir produire un débit de fuite permanent. Ainsi, la fuite étant permanente, le pliage au sol la voilure d'aérofreinage et son intégration au satellite sont facilités car l'air peut s'en échapper via le dispositif de contrôle de fuite. Cela étant, dans certains modes de réalisation, avantageusement et selon l'invention au moins une -notamment chaque-voilure d'aérofreinage comprend en outre au moins une vanne de purge normalement ouverte à fermeture commandée mettant, lorsqu'elle est ouverte, l'intérieur de la voilure d'aérofreinage en communication de fluide avec l'espace extérieur. Une telle vanne de purge est en particulier avantageusement adaptée pour empêcher un déploiement intempestif de la voilure d'aérofreinage par diminution de pression externe lors d'un lancement, et pour pouvoir être fermée sur commande en vue du gonflage et du déploiement de la voilure d'aérofreinage pour la phase de désorbitation du satellite.

Dans certains modes de réalisation possibles, au moins un - notamment chaque- dispositif de contrôle de fuite est formé d'une vanne contrôlée permettant d'ajuster le débit de fuite à la demande.

En particulier, avantageusement et selon l'invention, au moins un -notamment chaque- dispositif de contrôle de fuite est choisi dans le groupe formé des vannes, des orifices calibrés, des tubes capillaires, des tubes à étranglement de section et de leurs combinaisons. Par exemple, au moins un - notamment chaque- dispositif de contrôle de fuite peut être formé d'un dispositif de vidange tel que décrit par EP2813433. D'autres modes de réalisation sont possibles.

Par ailleurs, avantageusement et selon l'invention au moins un filtre à particules placé à l'amont de chaque dispositif de contrôle de fuite. Un tel filtre à particules est en particulier avantageux pour éviter tout risque de bouchage du dispositif de contrôle de fuite.

Également, avantageusement et selon l'invention au moins une -notamment chaque- voilure d'aérofreinage comprend une soupape de sûreté limitant la pression de gaz dans la voilure d'aérofreinage. De la sorte, on évite tout risque d'explosion de la voilure d'aérofreinage.

L'invention s'étend également à un procédé d'aérofreinage d'un satellite mis en œuvre par un dispositif selon l'invention. L'invention s'étend donc à un procédé d'aérofreinage d'un satellite dans lequel au moins une voilure d'aérofreinage est déployée par gonflage par un gaz, dit gaz de gonflage, issu d'au moins un réservoir d'ergol du satellite auquel elle est reliée, caractérisé en ce que lors du déploiement par gonflage de chaque voilure d'aérofreinage, un débit de fuite de gaz de gonflage est libéré dans l'Espace, ce débit de fuite étant adapté pour :
- permettre l'introduction dans la voilure d'aérofreinage d'un débit, dit débit de gonflage, de gaz de gonflage issu dudit réservoir d'ergol adapté pour entraîner un déploiement de la voilure d'aérofreinage par gonflage,
- assurer une purge totale dudit réservoir d'ergol et de la voilure d'aérofreinage après le déploiement de la voilure d'aérofreinage,
   de sorte qu'il constitue un procédé d'aérofreinage et de passivation du satellite.

Avantageusement et selon l'invention, ledit débit de fuite est adapté pour permettre d'une part la désorbitation du satellite par aérofreinage et d'autre part sa passivation avant destruction dans l'atmosphère.

En outre, avantageusement et selon l'invention chaque voilure d'aérofreinage est reliée à au moins un réservoir d'ergol du satellite comprenant un gaz de pressurisation distinct d'un ergol de façon à pouvoir recevoir et être gonflée par ce gaz de pressurisation distinct d'un ergol. Ainsi, le gaz de gonflage est un gaz de pressurisation d'un réservoir d'ergol, notamment d'un réservoir d'hydrazine. En outre, avantageusement et selon l'invention l'ergol de chaque réservoir d'ergol est éjecté dans l'Espace avant gonflage de chaque voilure d'aérofreinage par le gaz de pressurisation. Ainsi, le réservoir d'ergol est vidangé et passivé avant le début de la phase de désorbitation.

L'invention s'étend également à un engin spatial -notamment mais non exclusivement un satellite artificiel d'une planète à atmosphère telle que la Terre- comprenant au moins un dispositif d'aérofreinage selon l'invention.

L'invention concerne également un dispositif d'aérofreinage, un procédé d'aérofreinage et un engin spatial caractérisés en combinaison par tout ou partie des caractéristiques mentionnées ci-dessus ou ci-après.

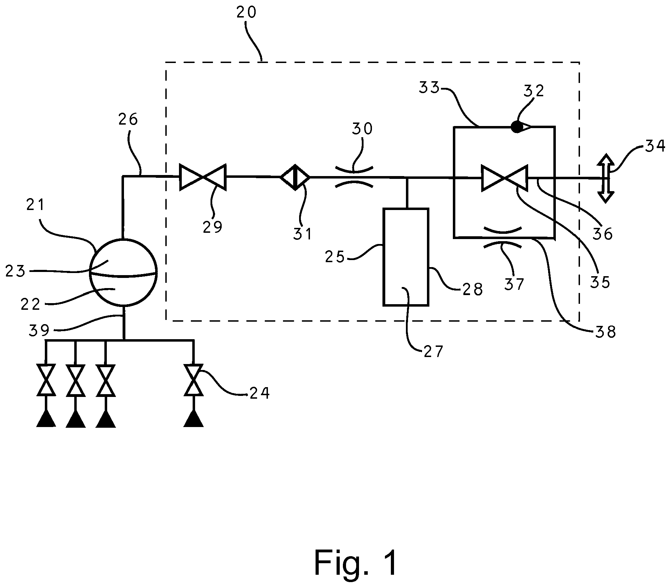

D'autres buts, caractéristiques et avantages de l'invention apparaîtront à la lecture de la description suivante donnée à titre non limitatif et qui se réfère à la figure 1 annexée qui est une représentation schématique d'un mode de réalisation de l'invention.

Un dispositif 20 d'aérofreinage d'un satellite artificiel, selon un mode de réalisation de l'invention, représenté à la figure 1, permet aussi d'en réaliser la passivation du satellite en mettant à profit la phase de désorbitation par aérofreinage pour passiver le satellite. Le dispositif 20 est assemblé à un réservoir 21 du satellite renfermant un volume 22 d'un ergol nécessaire au déplacement du satellite lors de sa mission. Le volume 22 d'ergol du réservoir 21 est relié par une conduite 39 à des propulseurs 24 du satellite. Le réservoir 21 renferme aussi un volume 23 d'un gaz de pressurisation opposé à la conduite 39 par rapport au volume 22 d'ergol, exerçant une pression orientée vers la conduite 39 sur l'ergol contenu dans le volume 22 du réservoir 21 afin d'alimenter en ergol les propulseurs 24 du satellite. Le réservoir 21 comprend une paroi périphérique rigide apte à résister aux chocs et aux déformations. La propulsion du satellite est réalisée par une poussée résultant de la production d'un volume de gaz chauds grâce à la décomposition de l'ergol sous l'action d'un catalyseur. Le gaz de pressurisation utilisé peut être de l'hélium He ou du diazote N₂, et l'ergol peut-être de l'hydrazine.

Le volume 23 de gaz de pressurisation du réservoir 21 est relié par une conduite 26 à au moins une voilure 25 d'aérofreinage, initialement pliée dans le satellite. Chaque voilure 25 d'aérofreinage comprend une paroi 28 périphérique étanche au gaz de pressurisation, et délimitant un volume 27 interne. La paroi 28 de la voilure 25 peut être fabriquée en matériaux composés de polyéthylènes, de polyesters, de polyazoles ou encore de fibres carbones conférant une élasticité et une souplesse permettant le pliage de la voilure 25 d'aérofreinage, et une résistance à la pression interne s'exerçant sur cette paroi 28. Les matériaux de fabrication de la paroi 28 de la voilure 25 d'aérofreinage sont aussi de préférence choisis pour conférer une résistance aux rayons ultraviolets.

Une telle voilure 25 d'aérofreinage peut être un ballon gonflable ou bien l'ensemble d'un mât gonflable assemblé à des voiles latérales non gonflables mais pouvant être déployées grâce au gonflage du mât. Dans un tel mode de réalisation la paroi 28 de la voilure 25 d'aérofreinage est la paroi du mât. Selon un autre mode réalisation, la voilure 25 d'aérofreinage est dotée d'une structure rigide assurant son maintien en forme après son déploiement et de voiles gonflables assemblées à cette structure rigide. Un mât déployable tel que décrit par WO 2010/004168 peut faire office de structure rigide d'une telle voilure d'aérofreinage. L'invention s'applique à tout autre mode de réalisation d'une voilure d'aérofreinage déployable par gonflage.

Lors de la phase de désorbitation du satellite, chaque voilure 25 d'aérofreinage est déployée dans l'Espace. Pour ce faire, le volume 27 interne de la voilure 25 d'aérofreinage est alimenté par du gaz de pressurisation provenant du volume 23 du réservoir 21 et acheminé par la conduite 26. Le gaz de pressurisation exerce alors une pression sur la paroi 28 de la voilure 25 d'aérofreinage permettant ainsi de gonfler, et donc de déployer la voilure 25 d'aérofreinage.

Le déploiement de la voilure 25 d'aérofreinage est amorcé par l'ouverture d'une vanne 29 de déploiement assemblée à la conduite 26 entre la voilure 25 d'aérofreinage et le réservoir 21. Cette vanne 29 de déploiement est fermée durant la mission du satellite afin d'isoler le gaz de pressurisation dans le réservoir 21 et n'est ouverte qu'à partir de la phase de désorbitation du satellite. Son ouverture peut être actionnée par un dispositif pyrotechnique, commandé ou télécommandé.

Afin de contrôler le déploiement de la voilure 25 d'aérofreinage, un dispositif 30 de contrôle du gonflage est prévu en série sur la conduite 26, entre la vanne 29 de déploiement et la voilure 25 d'aérofreinage. Ce dispositif 30 de contrôle du gonflage permet de réguler un débit, dit débit de gonflage, d'acheminement du gaz de pressurisation dans la voilure 25 d'aérofreinage. En régulant le débit de gonflage, le dispositif 30 de contrôle du gonflage permet, en particulier, de contrôler la vitesse de déploiement de la voilure 25 d'aérofreinage. Le dispositif 30 de contrôle du gonflage peut être choisi dans le groupe formé des vannes, des orifices calibrés, des tubes capillaires, des tubes à étranglement et de leurs combinaisons.

Un filtre 31 à particules est interposé en série entre la vanne 29 de déploiement et le dispositif 30 de contrôle du gonflage. Ce filtre 31 permet, en particulier, d'éviter tout risque de bouchage du dispositif 30 de contrôle de fuite.

Afin de limiter la pression du gaz de pressurisation s'exerçant sur la paroi de la voilure 25 d'aérofreinage, une soupape 32 de sûreté est assemblée à une branche 33 reliée à la conduite 26 entre le dispositif 30 de contrôle du gonflage et la voilure 25 d'aérofreinage, en parallèle à la voilure 25 d'aérofreinage. Cette soupape 32 de sûreté permet, en particulier, de s'assurer que la voilure 25 d'aérofreinage n'explose pas sous l'effet d'une surpression du gaz de pressurisation s'exerçant sur la paroi 28 de la voilure 25 d'aérofreinage. Pour ce faire, lorsqu'un seuil maximum de pression est atteint, la soupape 32 de sûreté diffuse un débit de gaz de pressurisation issu de la voilure 25 d'aérofreinage et/ou de la conduite 26 dans l'Espace 34 extérieur.

Une vanne 35 de purge est placée dans une branche 36 reliée à la conduite 26 entre le dispositif 30 de contrôle du gonflage et la voilure 25 d'aérofreinage, en parallèle à la voilure 25 d'aérofreinage et à la branche 33 de la soupape 32 de sûreté. Cette vanne 35 de purge est ouverte lors de la mission du satellite mettant ainsi l'intérieur de la voilure 25 d'aérofreinage en communication de fluide avec l'Espace 34 extérieur. L'ouverture de cette vanne 35 de purge empêche ainsi un déploiement intempestif de la voilure 25 d'aérofreinage par diminution de pression externe lors d'un lancement. Lors de la phase de désorbitation du satellite, la vanne 35 de purge est fermée afin de permettre le gonflage et le déploiement de la voilure 25 d'aérofreinage.

La passivation du satellite est réalisée par un dispositif 37 de contrôle de fuite placé dans une branche 38 reliée à la conduite 26 entre le dispositif 30 de contrôle du gonflage et la voilure 25 d'aérofreinage, en parallèle à la voilure 25 d'aérofreinage et à la branche 36 de la vanne 35 de purge. Ce dispositif 37 de contrôle de fuite libère, lors de la phase de désorbitation, un débit de fuite du gaz de pressurisation dans l'Espace. Le dispositif 37 de contrôle de fuite est agencé pour que le débit du gaz de pressurisation s'échappant dans l'Espace par ce dispositif 37 de contrôle de fuite soit inférieur à un débit minimal de gonflage mais également pour que la pression du gaz de pressurisation s'exerçant sur la paroi 28 de la voilure 25 d'aérofreinage soit suffisante au déploiement de la voilure 25 d'aérofreinage. En effet, si le débit du gaz de pressurisation s'échappant dans l'Espace par ce dispositif 37 de contrôle de fuite est supérieur à un débit minimal de gonflage, la voilure 25 d'aérofreinage ne peut pas se déployer. C'est pourquoi le dispositif 37 de contrôle de fuite est choisi pour que le débit de fuite soit nettement inférieur au débit de gonflage pour que la voilure 25 d'aérofreinage puisse se déployer rapidement lors de la phase de désorbitation et qu'elle puisse rester suffisamment gonflée pour que le satellite atteigne une orbite de destruction. Le dispositif 37 de contrôle de fuite est également adapté pour maintenir le débit de fuite pendant une durée adaptée pour permettre la passivation du satellite, c'est-à-dire pour permettre, avant sa destruction dans l'atmosphère, la purge totale dans l'Espace du gaz de pressurisation présent dans la voilure 25 d'aérofreinage, dans le réservoir 21 et dans la conduite 26 dans l'Espace, avant sa destruction dans l'atmosphère.

Avantageusement, le dispositif 37 de contrôle de fuite est également adapté pour pouvoir produire un débit de fuite permanent tant qu'un fluide est présent dans la conduite 26 et/ou dans la voilure 25 d'aérofreinage. Cette fuite a aussi l'avantage de faciliter le pliage au sol de la voilure 25 d'aérofreinage et son intégration au satellite car l'air peut s'en échapper via le dispositif 37 de contrôle de fuite.

Le dispositif 37 de contrôle de fuite est choisi avantageusement dans le groupe formé des vannes, des orifices calibrés, des tubes capillaires, des tubes à étranglement de section et de leurs combinaisons. Par exemple, le dispositif 37 de contrôle de fuite peut être formé d'un dispositif de vidange tel que décrit par EP2813433.

L'aérofreinage et la passivation d'un satellite sont mis en œuvre en éjectant dans l'Espace, dans un premier temps, l'ergol présent dans le volume 22 du réservoir 21 du satellite puis en fermant la vanne 35 de purge. Pour ce faire, une vanne de vidange, mettant le volume 22 d'ergol en communication avec l'Espace extérieur, peut être assemblée au réservoir et maintenue ouverte lors des phases de désorbitation et de passivation. La vanne 29 de déploiement est ensuite ouverte afin que le gaz de pressurisation présent dans le volume 23 du réservoir, filtré des particules indésirables qu'il peut contenir par le filtre 31 à particules, se diffuse dans la voilure 25 d'aérofreinage amorçant ainsi son gonflage et son déploiement selon un débit de gonflage ajusté par le dispositif 30 de contrôle du gonflage et un débit de fuite ajusté par le dispositif 37 de contrôle de fuite. La surpression du gaz de pressurisation dans la voilure 25 d'aérofreinage est alors contrôlée par la soupape 32 de sûreté. Le débit de fuite permet de contrôler la vitesse de passivation. Une fois que la voilure 25 d'aérofreinage est déployée, le satellite ralenti grâce aux forces de frottements s'exerçant sur lui et sur la voilure 25 d'aérofreinage, permettant ainsi sa désorbitation. La voilure 25 d'aérofreinage se dégonfle ensuite grâce au dispositif 37 de contrôle de fuite par lequel le gaz de pressurisation présent dans la voilure 25 d'aérofreinage ainsi que dans le réservoir 21 et dans la conduite 26 s'échappe, finalisant ainsi la phase de passivation avant la destruction du satellite dans l'atmosphère.

L'invention peut faire l'objet de nombreuses variantes de réalisation par rapport au mode de réalisation décrit ci-dessus et représenté sur la figure. En particulier, l'entrée du dispositif de contrôle de fuite peut être placée n'importe où sur un embranchement parallèle de la conduite reliant la conduite à l'espace extérieur entre la vanne de déploiement et la voilure d'aérofreinage, c'est-à-dire entre la vanne de déploiement de gonflage et le filtre à particules ou bien entre le filtre à particules et le dispositif de contrôle du gonflage. Le dispositif de contrôle de fuite peut également être assemblé à la paroi de la voilure d'aérofreinage.

Dans certains modes de réalisation, un dispositif d'aérofreinage et de passivation peut disposer de plusieurs réservoirs et/ou de plusieurs voilures d'aérofreinage et/ou de plusieurs conduites reliant le(s) réservoir(s) à la (aux) voilure(s) d'aérofreinage. Le dispositif peut également posséder plusieurs dispositifs de contrôle fuite ajustés pour que le gonflage et la désorbitation de l'engin spatial puissent être réalisés.

Dans certains modes de réalisation, la voilure d'aérofreinage n'est pas intégrée à un satellite mais à un autre engin spatial. Par exemple, la voilure d'aérofreinage peut être reliée à un étage amovible d'une fusée.

## Revendications

1. Dispositif (20) d'aérofreinage d'un satellite artificiel d'une planète à atmosphère, comprenant au moins une voilure (25) d'aérofreinage reliée à au moins un réservoir (21) d'ergol du satellite de façon à pouvoir être déployée par gonflage par un gaz, dit gaz de gonflage, issu d'un tel réservoir (21),
**caractérisé en ce qu'**il comprend au moins un dispositif (37) de contrôle de fuite adapté pour libérer un débit de fuite de gaz de gonflage dans l'Espace lors du déploiement de chaque voilure (25) d'aérofreinage, ce débit de fuite étant adapté pour :
- permettre l'introduction dans la voilure (25) d'aérofreinage d'un débit, dit débit de gonflage, de gaz de gonflage issu dudit réservoir (21) d'ergol adapté pour entraîner un déploiement de la voilure (25) d'aérofreinage par gonflage,
- assurer une purge totale dudit réservoir (21) d'ergol et de la voilure (25) d'aérofreinage après le déploiement de la voilure (25) d'aérofreinage,
de sorte qu'il constitue un dispositif (20) d'aérofreinage et de passivation du satellite.

2. Dispositif selon la revendication 1 **caractérisé en ce que** le dispositif (37) de contrôle de fuite est adapté pour maintenir ledit débit de fuite après le déploiement de la voilure (25) d'aérofreinage, au moins pendant une durée adaptée pour permettre d'une part la désorbitation du satellite par aérofreinage et d'autre part sa passivation avant destruction dans l'atmosphère.

3. Dispositif selon l'une quelconque des revendications 1 ou 2 **caractérisé en ce qu'**au moins une voilure (25) d'aérofreinage est dotée d'une structure rigide assurant son maintien en forme après déploiement en l'absence de gaz dans la voilure d'aérofreinage.

4. Dispositif selon l'une des revendications 1 à 3 **caractérisé en ce qu'**au moins un dispositif (37) de contrôle de fuite est interposé entre chaque voilure (25) d'aérofreinage et chaque réservoir (21) d'ergol auquel cette voilure d'aérofreinage est reliée.

5. Dispositif selon l'une des revendications 1 à 4 **caractérisé en ce que** chaque voilure d'aérofreinage est reliée à au moins un réservoir (21) d'ergol par au moins une conduite (26) comprenant une vanne (29) de déploiement à ouverture commandée, et **en ce qu'**au moins un dispositif (37) de contrôle de fuite est interposé entre chaque vanne de déploiement et la voilure d'aérofreinage.

6. Dispositif selon l'une des revendications 1 à 5 **caractérisé en ce que** chaque voilure (25) d'aérofreinage est reliée à au moins un réservoir d'ergol (21) du satellite comprenant un gaz de pressurisation distinct d'un ergol de façon à pouvoir recevoir et être gonflée par ce gaz de pressurisation distinct d'un ergol.

7. Dispositif selon l'une des revendications 1 à 6 **caractérisé en ce qu'**au moins un dispositif (37) de contrôle de fuite est adapté pour pouvoir produire un débit de fuite permanent.

8. Dispositif selon la revendication 7 **caractérisé en ce que** chaque dispositif (37) de contrôle de fuite est choisi dans le groupe formé des vannes, des orifices calibrés, des tubes capillaires, des tubes à étranglement de section et de leurs combinaisons.

9. Dispositif selon l'une des revendications 1 à 8 **caractérisé en ce qu'**il comprend au moins un filtre (31) à particules placé à l'amont de chaque dispositif de contrôle de fuite.

10. Dispositif selon l'une des revendications 1 à 9 **caractérisé en ce que** chaque voilure (25) d'aérofreinage comprend en outre au moins une vanne de purge (35) normalement ouverte à fermeture commandée mettant, lorsqu'elle est ouverte, l'intérieur de la voilure (25) d'aérofreinage en communication de fluide avec l'espace (34) extérieur.

11. Dispositif selon l'une des revendications 1 à 10 **caractérisé en ce que** chaque voilure (25) d'aérofreinage comprend une soupape (32) de sûreté limitant la pression de gaz dans la voilure (25) d'aérofreinage.

12. Procédé d'aérofreinage d'un satellite dans lequel au moins une voilure (25) d'aérofreinage est déployée par gonflage par un gaz, dit gaz de gonflage, issu d'au moins un réservoir (21) d'ergol du satellite auquel elle est reliée, **caractérisé en ce que** lors du déploiement par gonflage de chaque voilure (25) d'aérofreinage, un débit de fuite de gaz de gonflage est libéré dans l'Espace, ce débit de fuite étant adapté pour :
- permettre l'introduction dans la voilure (25) d'aérofreinage d'un débit, dit débit de gonflage, de gaz de gonflage issu dudit réservoir (21) d'ergol adapté pour entraîner un déploiement de la voilure (25) d'aérofreinage par gonflage,
- assurer une purge totale dudit réservoir (21) d'ergol et de la voilure (25) d'aérofreinage après le déploiement de la voilure (25) d'aérofreinage,
de sorte qu'il constitue un procédé d'aérofreinage et de passivation du satellite.

13. Procédé selon la revendication 12 **caractérisé en ce que** ledit débit de fuite est adapté pour permettre d'une part la désorbitation du satellite par aérofreinage et d'autre part sa passivation avant destruction dans l'atmosphère.

14. Procédé selon l'une quelconque des revendications 12 ou 13 **caractérisé en ce que** chaque voilure (25) d'aérofreinage est reliée à au moins un réservoir (21) d'ergol du satellite comprenant un gaz de pressurisation distinct d'un ergol de façon à pouvoir recevoir et être gonflée par ce gaz de pressurisation distinct d'un ergol, et **en ce que** l'ergol de chaque réservoir (21) d'ergol est éjecté dans l'Espace avant gonflage de chaque voilure (25) d'aérofreinage par le gaz de pressurisation.

15. Engin spatial -notamment satellite artificiel d'une planète à atmosphère- **caractérisé en ce qu'**il comprend au moins un dispositif (20) d'aérofreinage selon l'une des revendications 1 à 11.

## Patentansprüche

1. Vorrichtung (20) zur Atmosphärenbremsung eines künstlichen Satelliten eines Planeten mit Atmosphäre, umfassend mindestens eine Besegelung (25) zur Atmosphärenbremsung, die mit mindestens einem Treibstofftank (21) des Satelliten derart verbunden ist, um durch Aufblasen durch ein Gas, das Aufblasgas genannt wird, entfaltet werden zu können, das aus einem solchen Tank (21) stammt,
**dadurch gekennzeichnet, dass** sie mindestens eine Vorrichtung (37) zur Leck-Prüfung umfasst, die ausgeführt ist, um beim Entfalten jeder Besegelung (25) zur Atmosphärenbremsung einen Aufblasgas-Leck-Durchsatz in den Weltraum freizusetzen, wobei dieser Leck-Durchsatz ausgeführt ist, um:
- das Einführen in die Besegelung (25) zur Atmosphärenbremsung eines Durchsatzes, der Aufblasdurchsatz genannt wird, eines Aufblasgases, das aus dem Treibstofftank (21) stammt, zu erlauben, der ausgeführt ist, um ein Entfalten der Besegelung (25) zur Atmosphärenbremsung anzutreiben,
- für eine vollständige Entlüftung des Treibstofftanks (21) und der Besegelung (25) zur Atmosphärenbremsung nach dem Entfalten der Besegelung (25) zur Atmosphärenbremsung zu sorgen, sodass er eine Vorrichtung (20) zur Atmosphärenbremsung und zur Passivierung des Satelliten bildet.

2. Vorrichtung nach Anspruch 1, **dadurch gekennzeichnet, dass** die Vorrichtung (37) zur Leck-Prüfung ausgeführt ist, um den Leck-Durchsatz nach dem Entfalten der Besegelung (25) zur Atmosphärenbremsung mindestens für eine Dauer aufrecht zu erhalten, die ausgeführt ist, um einerseits das Verlassen der Umlaufbahn des Satelliten durch Atmosphärenbremsung zu ermöglichen, und andererseits seine Passivierung vor Zerstörung in der Atmosphäre.

3. Vorrichtung nach einem der Ansprüche 1 oder 2, **dadurch gekennzeichnet, dass** mindestens eine Besegelung (25) zur Atmosphärenbremsung mit einer starren Struktur versehen ist, die für deren Beibehaltung in Form nach dem Entfalten bei Abwesenheit von Gas in der Besegelung zur Atmosphärenbremsung sorgt.

4. Vorrichtung nach einem der Ansprüche 1 bis 3, **dadurch gekennzeichnet, dass** mindestens eine Vorrichtung (37) zur Leck-Prüfung zwischen jeder Besegelung (25) zur Atmosphärenbremsung und jedem Treibstofftank (21), mit dem diese Besegelung zur Atmosphärenbremsung verbunden ist, eingesetzt ist.

5. Vorrichtung nach einem der Ansprüche 1 bis 4, **dadurch gekennzeichnet, dass** jede Besegelung zur Atmosphärenbremsung durch mindestens eine Leitung (26), die ein Entfaltungsventil (29) mit gesteuerter Öffnung umfasst, mit mindestens einem Treibstofftank (21) verbunden ist, und dadurch, dass mindestens eine Vorrichtung (37) zur Leck-Prüfung zwischen jedem Entfaltungsventil und der Besegelung zur Atmosphärenbremsung eingesetzt ist.

6. Vorrichtung nach einem der Ansprüche 1 bis 5, **dadurch gekennzeichnet, dass** jede Besegelung (25) zur Atmosphärenbremsung mit mindestens einem Treibstofftank (21) des Satelliten verbunden ist, der ein Druckgas umfasst, das sich von einem Treibstoff unterscheidet, um dieses Druckgas aufnehmen, und damit aufgeblasen werden zu können, das sich von einem Treibstoff unterscheidet.

7. Vorrichtung nach einem der Ansprüche 1 bis 6, **dadurch gekennzeichnet, dass** mindestens eine Vorrichtung (37) zur Leck-Prüfung ausgeführt ist, um einen permanenten Leck-Durchsatz erzeugen zu können.

8. Vorrichtung nach Anspruch 7, **dadurch gekennzeichnet, dass** jede Vorrichtung (37) zur Leck-Prüfung aus der Gruppe ausgewählt wird, die aus den Ventilen, den kalibrierten Öffnungen, Kapillarrohren, Querschnittsminderungsrohren und deren Kombinationen gebildet wird.

9. Vorrichtung nach einem der Ansprüche 1 bis 8, **dadurch gekennzeichnet, dass** sie mindestens einen Partikelfilter (31) umfasst, der stromaufwärts von jeder Vorrichtung zur Leck-Prüfung platziert ist.

10. Vorrichtung nach einem der Ansprüche 1 bis 9, **dadurch gekennzeichnet, dass** jede Besegelung (25) zur Atmosphärenbremsung weiter mindestens ein Schließer-Entlüftungsventil (35) mit gesteuerter Schließung umfasst, das, wenn es offen ist, das Innere der Besegelung (25) zur Atmosphärenbremsung in Fluidverbindung mit dem Außenraum (34) versetzt.

11. Vorrichtung nach einem der Ansprüche 1 bis 10, **dadurch gekennzeichnet, dass** jede Besegelung (25) zur Atmosphärenbremsung ein Sicherheitsventil (32) umfasst, das den Gasdruck in der Besegelung (25) zur Atmosphärenbremsung einschränkt.

12. Verfahren zur Atmosphärenbremsung eines Satelliten, wobei mindestens eine Besegelung (25) zur Atmosphärenbremsung durch Aufblasen durch ein Gas, das Aufblasgas genannt wird, entfaltet wird, das aus mindestens einem Treibstofftank (21) des Satelliten stammt, mit dem sie verbunden ist, **dadurch gekennzeichnet, dass** beim Entfalten durch Aufblasen jeder Besegelung (25) zur Atmosphärenbremsung ein Leck-Durchsatz eines Aufblasgases in den Weltraum freigesetzt wird, wobei dieser Leck-Durchsatz ausgeführt ist, um:
- das Einführen in die Besegelung (25) zur Atmosphärenbremsung eines Durchsatzes, der Aufblasdurchsatz genannt wird, eines Aufblasgases, das aus dem Treibstofftank (21) stammt, zu erlauben, der ausgeführt ist, um ein Entfalten der Besegelung (25) zur Atmosphärenbremsung durch Aufblasen anzutreiben,
- für eine vollständige Entlüftung des Treibstofftanks (21) und der Besegelung (25) zur Atmosphärenbremsung nach dem Entfalten der Besegelung (25) zur Atmosphärenbremsung zu sorgen, sodass er eine Vorrichtung (20) zur Atmosphärenbremsung und zur Passivierung des Satelliten bildet.

13. Verfahren nach Anspruch 12, **dadurch gekennzeichnet, dass** der Leck-Durchsatz ausgeführt ist, um einerseits das Verlassen der Umlaufbahn des Satelliten durch Atmosphärenbremsung zu ermöglichen, und andererseits seine Passivierung vor Zerstörung in der Atmosphäre.

14. Verfahren nach einem der Ansprüche 12 oder 13, **dadurch gekennzeichnet, dass** jede Besegelung (25) zur Atmosphärenbremsung mit mindestens einem Treibstofftank (21) des Satelliten verbunden ist, der ein Druckgas umfasst, das sich von einem Treibstoff unterscheidet, um dieses Druckgas aufnehmen, und damit aufgeblasen werden zu können, das sich von einem Treibstoff unterscheidet, und dadurch, dass das Treibstoff jedes Treibstofftanks (21) vor dem Aufblasen jeder Besegelung (25) zur Atmosphärenbremsung durch das Druckgas in den Weltraum ausgestoßen wird.

15. Weltraumfahrzeug, insbesondere ein künstlicher Satellit eines Planeten mit Atmosphäre, **dadurch gekennzeichnet, dass** es mindestens eine Vorrichtung (20) zur Atmosphärenbremsung nach einem der Ansprüche 1 bis 11 umfasst.

## Claims

1. A device (20) for air-braking an artificial satellite of a planet with an atmosphere, comprising at least one air-braking wing (25) connected to at least one propellant tank (21) of the satellite so as to be deployable by inflation by a gas, called inflation gas, originating from such a tank (21),
**characterized in that** it comprises at least one leakage monitoring device (37) adapted to release an inflation gas leakage flow in Space during the deployment of each air-braking wing (25), this leakage flow being adapted to:
- enable the introduction, into the air-braking wing (25), of a flow, called inflation flow, of an inflation gas originating from said propellant tank (21) adapted to cause a deployment of the air-braking wing (25) by inflation,
- ensure a complete purging of said propellant tank (21) and the air-braking wing (25) after the deployment of the air-braking wing (25),
such that it constitutes a device (20) for air-braking and passivating the satellite.

2. The device according to claim 1, **characterized in that** the leakage monitoring device (37) is adapted to maintain said leakage flow after the deployment of the air-braking wing (25), at least for a period adapted to enable, on the one hand, the de-orbiting of the satellite by air-braking and, on the other hand, its passivation before destruction in the atmosphere.

3. The device according to any one of claims 1 or 2, **characterized in that** at least one air-braking wing (25) is provided with a rigid structure ensuring the maintenance of its shape after deployment in the absence of gas in the air-braking wing.

4. The device according to any of claims 1 to 3, **characterized in that** at least one leakage monitoring device (37) is interposed between each air-braking wing (25) and each propellant tank (21) to which this air-braking wing is connected.

5. The device according to any of claims 1 to 4, **characterized in that** each air-braking wing is connected to at least one propellant tank (21) by at least one conduit (26) comprising a controlled opening deployment valve (29), and **in that** at least one leakage monitoring device (37) is interposed between each deployment valve and the air-braking wing.

6. The device according to any of claims 1 to 5, **characterized in that** each air-braking wing (25) is connected to at least one propellant tank (21) of the satellite comprising a pressurizing gas distinct from a propellant so as to be able to receive and be inflated by this pressurizing gas distinct from a propellant.

7. The device according to any of claims 1 to 6, **characterized in that** at least one leakage monitoring device (37) is adapted to be able to produce a permanent leakage flow.

8. The device according to claim 7, **characterized in that** each leakage monitoring device (37) is selected from the group formed by valves, calibrated orifices, capillary tubes, section constriction tubes and the combinations thereof.

9. The device according to any of claims 1 to 8, **characterized in that** it comprises at least one particle filter (31) placed upstream of each leakage monitoring device.

10. The device according to any of claims 1 to 9, **characterized in that** each air-braking wing (25) further comprises at least one purge valve (35) normally open with a controlled closure setting, when it is open, the inside of the air-braking wing (25) in fluid communication with the external space (34).

11. The device according to any of claims 1 to 10, **characterized in that** each air-braking wing (25) comprises a safety relief valve (32) limiting the gas pressure in the air-braking wing (25).

12. A method for air-braking a satellite in which at least one air-braking wing (25) is deployed by inflation by a gas, called inflation gas, originating from at least one propellant tank (21) of the satellite to which it is connected, **characterized in that** during the deployment by inflation of each air-braking wing (25), an inflation gas leakage flow is released in Space, this leakage flow being adapted to:
- enable the introduction, into the air-braking wing (25), of a flow, called inflation flow, of an inflation gas originating from said propellant tank (21) adapted to cause a deployment of the air-braking wing (25) by inflation,
- ensure a complete purging of said propellant tank (21) and the air-braking wing (25) after the deployment of the air-braking wing (25),
such that it constitutes a device (20) for air-braking and passivating the satellite.

13. The air-braking method according to claim 12, **characterized in that** said leakage flow is adapted to enable, on the one hand, the de-orbiting of the satellite by air-braking and, on the other hand, its passivation before destruction in the atmosphere.

14. The air-braking method according to any one of claims 12 or 13, **characterized in that** each air-braking wing (25) is connected to at least one propellant tank (21) of the satellite comprising a pressurizing gas distinct from a propellant so as to be able to receive and be inflated by this pressurizing gas distinct from a propellant, and **in that** the propellant of each propellant tank (21) is ejected into the Space before inflation of each air-braking wing (25) by the pressurizing gas.

15. A spacecraft , in particular an artificial satellite of a planet with an atmosphere , **characterized in that** it comprises at least one air-braking device (20) according to any of claims 1 to 11.
